# EUROPEAN PATENT APPLICATION

(11) **EP 4 604 104 A1**
(43) Date of publication of application: **20.08.2025**
(21) Application number: 24216138.8
(22) Date of filing: 28.11.2024
(51) Int. Cl.: G09F 7/18, G09F 21/04

(54) **A RELEASABLY ATTACHABLE SIGN DISPLAY DEVICE**

(30) Priority: 19.02.2024 SE 2430081
(71) Applicant: Majakliniken AB, 79172 Falun (SE)
(72) Inventor: LISS, Olle, 79172 Falun (SE)
(74) Representative: Bjerkén Hynell KB

(57) **Abstract**

This invention relates to a releasably attachable sign display device (2), comprising a holding body part (20) and a fastening body part (21) arranged to be releasably attachable to each other by means of a releasable attachment arrangement, wherein said holding body part (20) is arranged with at least one sign holding member (5) arranged to securely hold a sign (6) against an outer surface (262) of said holding body part (20),
wherein said holding body part (20) includes a gripping body portion (201) comprising a gripping member (200) arranged to grip around a ball of a towbar (3) and that said fastening body part (20) includes an interacting member (210) arranged to releasably secure said grip around said ball of said gripping member (200), wherein said releasable sign display device (2) may be securely fasten to a vehicle (1).

## Description

### TECHNICAL FIELD

The present invention relates to a releasably attachable sign display, releasably attachable to a vehicle.

### BACKGROUND OF THE INVENTION

There are known many different kinds of releasably attachable sign displays that are releasably attachable to a vehicle. A frequent use thereof is to temporarily fasten a "LEARNER" (ÖVNINGSKÖR) sign on a vehicle when coaching a person how to drive. Sign displays of a magnetic kind are frequently used. However, many modern cars, especially cars having a back hatch, do not have sufficient magnetic space to securely keep the display sign fastened when driving and or does not provide sufficient magnetic force, e.g. due to dirt. Hence, it often occurs that magnetic display signs are lost, which of course is undesired, but which also may cause accidents due to not displaying "LEARNER", which is supposed to alert other drivers.

There are known a variety of releasably attachable sign displays, wherein mechanical means are used to attach it to a vehicle, e.g. from US 20150128464 there is known a sign display fastener that is releasably attachable by means of a tension clip, wherein the fastener configuration forms a slide-in region, a reception pocket and the tension clip communicating therebetween, enabling releasable attachment to a rim of a trunk hatch or similar device of a car.

Further, US 20140290105 shows a releasably attachable sign displays that may be attached to a ball of a tow bar.

However, existing known a releasably attachable sign displays are all disadvantages for some reason, e.g. due to bulkiness and/or difficulty to attach the sign display fasteners and/or difficulty to exchange sign of the sign display fastener.

### SUMMARY OF THE INVENTION

It is an object of the invention to provide a releasably attachable sign display that eliminates or at least minimizes existing problems with known sign display fasteners, which is achieved by means of a releasably attachable sign display device as defined in claim 1.

Thanks to the invention there is provided a releasably attachable sign display device that is compact in its design and easy to attach to a vehicle having a towbar and wherein exchange/release/attachment of a sign thereto is easily performed.

### BRIEF DESCRIPTION OF THE DRAWINGS

In the following the invention will be described with reference to some preferred embodiments shown in the enclosed figures, wherein,
Fig. 1 shows a towbar having a releasably attachable sign display mounted on the ball of the towbar, according to the invention in a non-fastened mode,
Fig. 2 shows the same view as Fig. 1 wherein, the releasably attachable sign display is in a fastened mode,
Fig. 3 shows an exemplary embodiment of a holding body according to the invention, and
Fig. 4 shows an exemplary embodiment of a fastening body according to the invention.
Fig. 5 shows an alternate embodiment of a releasably attachable sign display according to the invention, in a perspective view, having the fastening body in a fastening position,
Fig. 6 shows a side view of a first exemplary modified embodiment of a holding body according to the invention,
Fig. 7 shows a view from below of an exemplary holding body according to the invention,
Fig. 8 shows a perspective view of a second exemplary modified embodiment of a holding body according to the invention, and,
Fig. 9 shows an enlarged view of a lower part of the design shown in Fig. 8.

### DETAILED DESCRIPTION OF THE INVENTION

The following detailed description is of the best currently contemplated modes of carrying out exemplary embodiments of the invention. The description is not to be taken in a limiting sense but is made merely for the purpose of illustrating the general principles of the invention, since the scope of the invention is best defined by the appended claims.

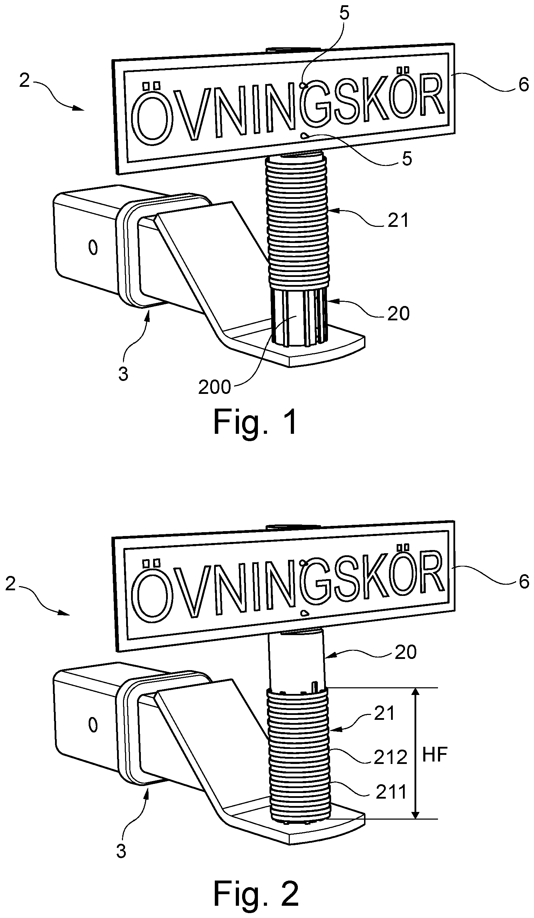

In Figs. 1 and 2 there are shown a tow bar 3 having a towbar ball (hidden) upon which there is positioned a releasably attachable sign display 2 according to the invention. In Fig. 1 the releasably attachable sign display 2 is in a non-fastened position and Fig. 2 in a fastened position. It is shown that the releasably attachable sign display 2 comprises a holding body part 20 and a fastening body 21, wherein the holding body part 20 comprises an upper body member 202 for holding a sign 6, by means of releasable attachment members 5.

The holding body part 20 comprises a gripping body member 200, which in cooperation with, when in contact with the fastening body 21 will securely fasten the releasably attachable sign display 2 onto the ball of the towbar 3.

Further, it is shown that the fastening body 21 is slidably arranged onto the holding body 20, and therefore preferably includes an outer surface 211 arranged with protrusions 212, e.g. in the form of annular ribs. In Fig. 1 the fastening body is positioned above the gripping body member 200 and in Fig. 2 in contact therewith, having fastened it to the ball.

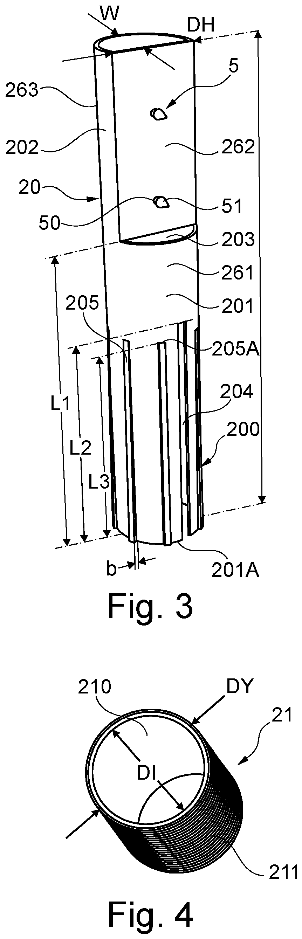

In Fig. 3 there is shown a perspective view of a preferred embodiment of a holding body part 20 in accordance with the invention. It is shown that the holding body part 20 comprises a lower 201 and an upper holding body portion 202. The upper holding body portion 202 comprises a flat outer surface 262 intended to be in contact with the sign 6 when attached by means of the releasable attachment members 5. The flat surface 262 is preferably in the form of a flat wall member that extends axially, adjacent the center plane of the holding body 201. As a consequence, there may be arranged a transversal wall member 203 that may act as a support for the lower edge of the sign 6. Furthermore, the transversal wall member 203 and the lower edge of the flat wall member will function as a stop limit for the ball of the tow bar, i.e. providing a hinder to move the holding body part 20 further down onto the ball of the tow bar. In a preferred embodiment the length L1 of the lower holding body portion 201 is such that when the ball reaches the level of the upper wall 203 it will also touch an upper support surface of the tow bar 3 which will improve stability of the releasably attachable sign display 2, when fastened.

In the preferred embodiment the outer shape of the lower holding body portion 201 is circular, such that the upper holding body portion 201 is in the form of a cylinder. Preferably the height h1 of the lower holding body portion 201 is larger than the height of the upper holding body portion 202, implying that the length L1 of the lower holding body portion 201 is more than 50% of the total height HH of the holding body 20.

Furthermore, it is shown that the lower holding body portion 201, preferably a portion adjacent a lower part thereof, is arranged with a gripping body portion 200, including interacting members 205, preferably in the form of protruding ribs. Preferably the interacting members 205 protrude a distance h out from the outer surface 261 of the lower holding body portion 201 with a distance hₘₐₓ (e.g. 1-3 mm) that is larger adjacent the lower end 201A than the starting position 205 of the interacting members 205. As noted, it is preferred that there are arranged a plurality of interacting members 205. In this embodiment the length L3 of the interacting members 205 may larger than 50% of the length L1 of the lower holding body portion 201.

Moreover, it is shown that there may be arranged at least one slit 204 which slit will facilitate flexibility of the gripping portion 200. This will enable easy mounting of the holding body part 20 onto the ball of the tow bar 3 and also enable the gripping portion 200 to be compressed to more firmly grip around the ball 3 when the fastening body 21 is pushed down and into interaction with the interacting members 205.

In Fig. 4 there is shown a perspective view from above of a fastening body 21 according to the invention. As can be noted it is in the shape of a cylinder, which preferably is arranged with gripping members 212 at its outer side. The diameter Di of the fastening body 21 is such that the inner surface 210 will be easily slid along the upper part of the lower holding body portion 201 to enable to compression of the gripping portion 200 when pushed down onto the lower part of lower holding body portion 201. Accordingly, the outer diameter DH of the holding body part 20 is equal to or slightly smaller than the inner diameter DI of the fastening body 21.

The attachment members 5 preferably provides a kind of snap-in function, e.g. by having a conical outer body 51 on top of a stem 50. The conical outer body 51 is preferably compressible and the sign 6 is preferably arranged with holes 60, such that the sign may easily be attached to the by means of pressing the conical outer body 51 into and through the holes 60, such that the sign 6 is securely attached to the releasably attachable sign display device 2. By having a resilient, compressive conical outer bodies 51 the sign 6 is thereafter easily released, when/if desired.

In order to release the releasably attachable sign display device 2 with the sign 6 from the towbar 3 it is easily achieved by pulling the fastening body 21 upwards out of contact with the interacting member 205 whereby the whole releasably attachable sign display device 2 may easily be detached from the towbar 3, i.e. facilitating easy removal and attachment. Once detached from the towbar 3 it is easy to just pull the sign 6 off to arrange for compact storage.

When using the invention preferably the releasably attachable sign display device 2 may firstly be releasably attached by means of the attachment members 5 to the sign 6. Thereafter the releasably attachable sign display devices 2, with the sign 6, may easily be attached to the ball of the towbar 3. Taking off the releasably attachable sign display device 2 with the sign 6 is similarly easy to achieve.

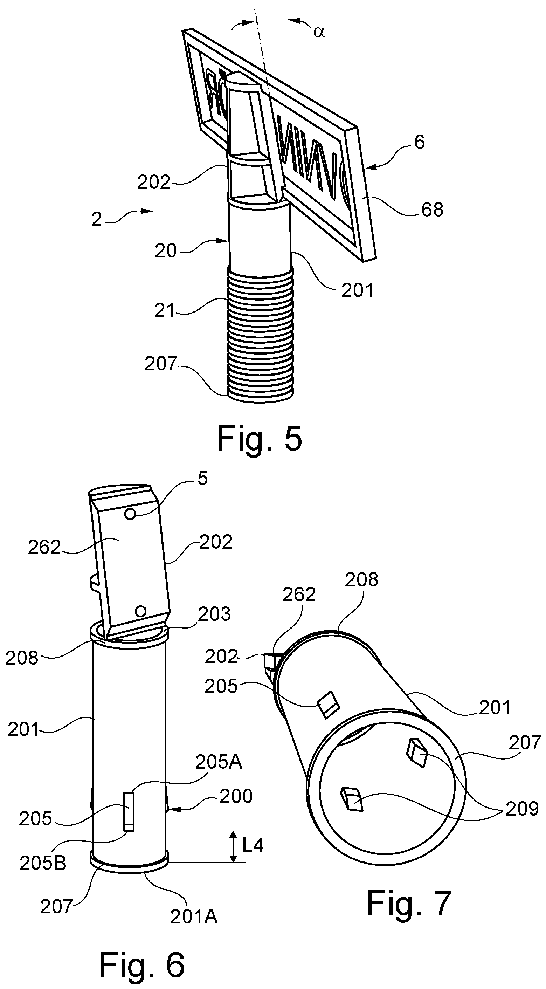

In Fig. 5, 6 and 7 there is show an alternate embodiment of a releasably attachable sign display 2 according to the invention, in a perspective view, having the fastening body 21 in a fastening position. Most details are the same as has been described above and therefore, in the following, there will be a focus on differing details. One difference is that the flat surface 262, providing support for the sign 6, is inclined an angle α in relation to a vertical plane, which may increase visibility of the sign 6.

Further, it is shown that the lower support surface 203 for the sign 6 must not necessarily be in the form of a wall, but an upper side of an upper flange member 208, positioned at the top of the lower holding body portion 201, which flange 208 may also increase strength of the holding body part 20. A similar lower flange member 207 may also be arranged at the lower end 201A of the lower holding body portion 201. Preferably the fastening body 21 may be somewhat resilient such that it more easily may be slid over one of the two flanges 207, 208 to thereafter be able to use the flanges 207, 208 as stop devices for the fastening body 21, being slide able them between. This is preferably performed in conjunction with production (e.g. by use of a special tool) such that the fastening body 21 is in place at delivery, which will provide a more compact unit and which may also eliminate risk of losing the fastening body 21.

Further, it is shown that the gripping body member 200 may be designed without any slit, i.e. having a continuous annular body for the gripping body member 200 and merely using the compression achieved by the interacting members 205 to achieve a secure grip around the ball of the towbar 3. Moreover, it is shown that a stop body portion 208 may be positioned within the gripping body portion 201, i.e. at a position below the upper end thereof and above the start position 205A of an interacting member 205, i.e. between L1 and L3. Further, it is shown that there may be the use of a plurality of interacting members 205 having a lower end position 205B that is at a position above the lower end 201A, i.e. creating a distance L4 there between, e.g. at least 10 mm. Further, it is shown that the interacting members 205 at the inside may be arranged with inwardly protruding gripping parts 209, that may assist in creating a safe grip around the ball of the tow bar 3. Finally, it is shown that the sign 6 may be combined with a frame 68, wherein either the frame 68 is arranged to interact with the attachment members 5 or the sign 6 itself.

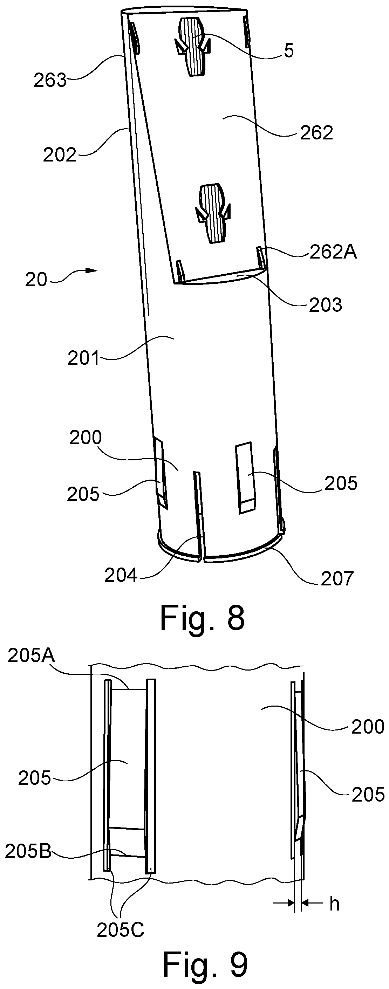

In Fig 8 there is shown a perspective view of a second exemplary modified embodiment of a holding body part 20 according to the invention, and Fig. 9 shows an enlarged view of a lower part of Fig. 8. Most details are the same as has been described above and therefore, in the following, there will be a focus on differing details. One difference is that basically the cylindrical design of the holding body portion 201, in contrast to Figs 5-7, is also used for a main portion of the holding body portion 202, wherein a transversal angled wall forms a kind of "cut out" at one side, providing an outer surface 262, for support of the sign 6. As shown there may be arranged sign support devices 262A protruding from outer surface 262, which may provide the purpose of providing a more stable grip of the sign 6. Moreover, it is shown that a holding member 5 instead of being a protruding member protruding from the outer surface 262 may be in the form of a passage intended to cooperate with a male device 60 of a sign 6 (not shown). The shown interacting members 205 are similar to those shown in Figs. 6 and 7, but also showing that along each side of each interacting member 205 there may be arrange a slit 205C, which may improve gripping performance.

It is evident that the releasably attachable sign display device 2 may be produced in many different materials to fulfil the purpose of the invention. However, it is foreseen that it is preferred to use some kind of polymeric material and that the production may be achieved by form molding. It is also foreseen that different polymers may be used (reinforced or unreinforced) that may produce suitable resiliency and rigidity to optimize and to adapt to different needs.

It should be understood, of course, that the foregoing relates to exemplary embodiments of the invention and that modifications may be made without departing from the spirit and scope of the invention as set forth in the following claims. For instance, it is evident that other shapes than circular may be used, e.g. hexagonal, octagonal, etc., to obtain a sufficient gripping action. Further, it is foreseen that the gripping portion 200 and the inside thereof may be arranged with inwardly protruding body members intended to come into contact with the stem holding the ball of the towbar, which may increase security/stability of the gripping function. Moreover, the interacting members 205 may be in other shapes than ribs, e.g. a row of protrusions, preferably of a height that increases towards the end 201A of the gripping body portion 201.

## Claims

1. A releasably attachable sign display device (2), comprising:
a holding body part (20) and a fastening body part (21) arranged to be attachable to each other,
wherein said holding body part (20) includes a gripping body portion (201) comprising a gripping member (200) arranged to grip around a ball of a towbar (3) and that said fastening body part (21) includes an interacting member (210) arranged to releasably secure said grip around said ball by means of said gripping member (200), whereby said releasable sign display device (2) may be securely fastened to a vehicle (1), wherein said holding body part (20) includes a holding body portion (202) at an opposite end thereof in relation to said gripping body portion (201) including said gripping member (200), **characterized in that** said gripping member (200) includes at least one axially extending protruding interacting member (205) protruding outwardly from the outer surface (261) of said gripping body portion (201), arranged to interact with said interacting member (210) to securely fasten said releasably,
attachable sign display device (2), wherein preferably said interacting member (205) is in the form of a rib, and that said fastening body part (21) is slide ably arranged onto said gripping body portion (201) between an upper position without interacting with said gripping member (200) and a lower position interacting with said gripping member (200) and that said holding body part (20) is arranged with at least one sign holding member (5) arranged to securely hold a sign (6) adjacent an outer surface (262) of said holding body part (20).

2. The releasably attachable sign display device of claim 1, wherein said gripping member (200) includes a plurality of axially extending protruding interacting member (205).

3. The releasably attachable sign display device of claim 2, wherein said at least one axially extending protruding interacting member (205) protrudes outwardly a distance (h) from said surface (261) a varying distance (h) that varies along the axial extension thereof, wherein preferably said distance (h) is larger adjacent a lower end (201A) of said gripping body portion (201) than at a start position (205A) of said axially extending protruding interacting member (205).

4. The releasably attachable sign display device of claim 3, wherein said start position (205A) of said axially extending protruding interacting member (205) is positioned at a distance (L3) above said lower end (201A) of said gripping body portion (201), wherein preferably said distance (L3) is smaller than the length (L1) of said gripping body portion (201).

5. The releasably attachable sign display device according to any preceding claim, wherein said gripping body portion (201) at least partly is resilient and includes at least one axially extending slit (204) arranged to enable radial expansion of said gripping body portion (201), wherein preferably said at least one slit (204) extends a slit distance (L2) smaller than the length (L1) of said gripping body portion (201), more preferred extends a slit distance (L2) that is larger than the axial rib extension (L3) of an axially extending protruding interacting member (205).

6. The releasably attachable sign display device according to any preceding claim, wherein there is arranged at least one stop body portion (203, 208) within or at the top of said holding body portion (202), wherein preferably said stop body portion (203) is arranged at the transition between said gripping body portion (201) and said holding body portion (202).

7. The releasably attachable sign display device according to claim 6, wherein said gripping body portion (201) has a larger cross-sectional area than said holding body portion (202) and preferably that said stop body portion (203) forms a lateral wall portion, wherein said lateral wall portion forms a bridge between an outer wall surface (261) of said gripping body portion (201) and said outer surface (262) of said holding body portion (202), wherein more preferred said outer wall surface (262) is flat.

8. The releasably attachable sign display device according to any preceding claim, wherein said fastening body part (21) has a length (HF) that is smaller than the length (L1) of said gripping body portion (201) and that said interacting member (210) of said fastening body part (21) is in the form of an inner surface of said fastening body part (21).

9. The releasably attachable sign display device according to any preceding claim, wherein said fastening body part (21) is cylindrical and that said gripping body portion (201) at least partly, preferably the whole length (L1) thereof, is also cylindrical and wherein preferably the inner diameter (Di) of said fastening body part (21) is equal to or larger than the diameter (DH) of the outer surface (206) of said holding body part (20).

10. The releasably attachable sign display device according to any preceding claim, wherein said sign holding member (5) is in the form of a passage in said holding body part (20)

11. The releasably attachable sign display device according to any preceding claim, wherein said sign holding member (5) is in the form of a protruding member (50, 51) of said holding body part (20)

12. A sign holding arrangement including a sign display device (2) according to any of claims 1-11, wherein said releasably attachable sign display device (2) when put into position is arranged to form a gap (G) between an inner surface (263) of the holding part (20) and an outer surface of said vehicle (1).
